# EUROPEAN PATENT APPLICATION

(11) **EP 2 043 100 A1**
(43) Date of publication of application: **01.04.2009**
(21) Application number: 07791572.6
(22) Date of filing: 30.07.2007
(51) Int. Cl.: G11B 20/10, G11B 20/12, H04N 5/76, H04N 5/91

(54) **DATA PROCESSING DEVICE, DATA PROCESSING METHOD, AND COMPUTER PROGRAM**

(30) Priority: 10.08.2006 JP 2006218135
(71) Applicant: Sony Corporation, Tokyo 108-0075 (JP)
(72) Inventor: MORIMOTO, Naoki, Tokyo 141-0001 (JP); ARIDOME, Kenichiro, Tokyo 141-0001 (JP); ISOBE, Yukio, Tokyo 141-0001 (JP); MAE, Atsushi, Tokyo 141-0001 (JP)
(74) Representative: Smith, Samuel Leonard
(86) International application number: PCT/JP2007/064887
(87) International publication number: WO 2008/018312

(57) **Abstract**

Under a device use environment in which a plurality of video-signal formats are present together, an operation of a video signal on a medium is performed in accordance with a proper video-signal format. In a UIAppInfo within a basic file of a loaded medium, reading is performed to detect which is set to 1, Is60 or Is50, and it is determined whether the read video-signal format matches a video-signal format supported by a target apparatus. In a case in which they match, use of the medium such as recording or playback is started; however, in a case in which they do not match, the use of the medium is not performed. The recording of streams of different video-signal formats is not performed on the same medium, the recording being a recording operation that is not allowed by AVCHD.

## Description

### Technical Field

The present invention relates to a data processing apparatus and a data processing method for performing processing such as recording or playback of data, and a computer program, and more particularly to a data processing apparatus and a wireless communication method for performing processing, such as recording, playback, or the like of a video signal shot by a digital video camera, and the like, on or from a predetermined recording medium, and a computer program.

In more detail, the present invention relates to a data processing apparatus and a data processing method for performing recording or playback of a video signal on or from a recording medium in accordance with a predetermined standard format, and a computer program, and more particularly to a data processing apparatus and a data processing method for operating a video signal on a recording medium in accordance with a proper video-signal format under a device use environment in which a plurality of video-signal formats are present together, and a computer program.

### Background Art

Disk-shaped recording media to which optical reading is applied (hereinafter referred to as "optical disks"), such as a DVD (Digital Versatile Disk) and a CD (Compact Disk), have been rapidly becoming popular for use in saving computer files and moving-image streams. Optical disks have a large storage capacity, and can be randomly accessed. Moreover, optical disks differ from contact-type magnetic recording media in that there is no concern regarding a recording surface becoming worn-out or damaged by reading, a head being crushed, and the like. Moreover, disk surfaces are firm, and there is low risk of accidental data loss. Recording-and-playback apparatuses using optical disks have already been widely utilized as, for example, external recording media and external recording apparatuses for computers. Recently, as the recording capacity of disk-shaped recording media increases, a video camera has emerged which is a type of video camera capable of storing moving images on a disk instead of conventional recording tapes (see, for example, Patent Document 1).

Since disk-shaped recording media can be randomly accessed, desired scenes can be efficiently found. In addition, since data is accessed in a noncontact manner, the recording media can be utilized without deterioration thereof. For example, the number of users of DVD video cameras has been increasing year after year since the introduction thereof into the market in the year 2000 because of good image quality and ease of operation, for example, editing can be performed.

For example, while the contents of existing disk format standards are continued to be used as necessary, functions regarding recording compatibility and additional-writing compatibility are added to AVCHD (Advanced Video Coding High Definition) standards, and specifications regarding data formats and the like for high resolution (High Definition: HD) video cameras are being defined. AVCHD standards employ an MPEG-4 AVC/H.264 scheme whose compression rate is high, and a main purpose thereof is to enable an HD image to be recorded on a recording medium of low capacity and of low speed. Although it is assumed that recording is performed on a DVD disk, recording can also be performed on various recording media such as a memory card or an HDD in accordance with the AVCHD standard format (for example, see non-patent document 1 and non-patent document 2).

Now, regarding video signals, there are a plurality of video-signal formats that are different in terms of the number of scanning lines per frame, the number of fields or frames displayed per second, a display mode (an interlace mode (i) or a progressive mode (p)), the number of pixels (horizontal x vertical) per frame, an aspect ratio, and the like.

In a conventional standard resolution (Standard Definition: SD) analog television scheme, an NTSC (National Television System Committee) scheme in which a frame constituted by 525 scanning lines is displayed in an interlaced manner at a frame rate of 60 Hz and a PAL (Phase Altering Line) scheme in which a frame constituted by 625 scanning lines is displayed in an interlaced manner at a frame rate of 50 Hz are major television systems. Which television system is employed differs from country to country or region to region. For example, the NTSC scheme is the standard used in the United States of America, and is also employed in Japan, Taiwan, Korea, the Philippines, and nations in South and Central America. On the other hand, the PAL scheme is employed in Germany, where the PAL system was developed, as a leader, and is also employed in West Europe, ASEAN countries, Middle Eastern countries, part of Africa, Brazil, Australia, and the like.

Moreover, high-resolution video-signal formats handled by AVCHD standards described above are broadly divided into 60i for performing display in an interlaced manner at a frame rate of 60 Hz, 50i for performing display in an interlaced manner at a frame rate of 50 Hz, and 24p for performing display in a progressive manner at a frame rate of 24 Hz. Among these, more specifically, 24p is a video signal for still-image display such as a menu screen. Specifications for AVCHD standards are tabulated in the following table.

**[Table 1]**

| RECORDING MEDIUM | | DVD MEDIUM (MEMORY CARD, HDD) HAVING 8 cm IN DIAMETER | | | | |
|---|---|---|---|---|---|---|
| V I D E O | VIDEO SIGNAL | 1080/60i | 720/60p | | 480/60i | 576/50i |
| | | 1080/50i | 720/50p | | | |
| | | 1080/24i | 720/24p | | | |
| | NUMBER OF PIXELS (HORIZONTAL × VERTICAL) | 1920×1080 | 1280×720 | | 720×480 | 720×576 |
| | | 1040×1080 | | | | |
| | ASPECT RATIO | 16:9 | 16:9 | | 4:3 OR 16:9 | 4:3 OR 16:9 |
| | LUMINANCE SAMPLING FREQUENCY | 74.25 MHz 55.7 MHz | 74.25 MHz | | 13.5 MHz | 13.5 MHz |
| | COMPRESSION SCHEME | MPEG-4 AVC/H.264 | | | | |
| | SAMPLING FREQUENCY RATIO | 4:2:0 | | | | |
| | NUMBER OF QUANTIZATION BITS | 8 BITS (BOTH LUMINANCE AND COLOR DIFFERENCE) | | | | |
| S O U N D | COMPRESSION SCHEME | DOLBY DIGITAL (AC-3) | | LINEAR PCM | | |
| | ENCODING SPEED AFTER COMPRESSION | 64 k THROUGH 640 kbps | | 1.5 Mbps (2 CHANNELS) | | |
| | SOUND MODE | 1 THROUGH 5.1 CHANNELS | | 1 THROUGH 7.1 CHANNELS | | |
| STREAM STRUCTURE AT TIME OF RECORDING | | MPEG-2 TRANSPORT STREAM | | | | |
| MAXIMUM TRANSMISSION SPEED | | 18 Mbps | | | | |

Performance of signal conversion is generally difficult between video signals whose frame rates are different, and side effects arise such as a need for appliances for estimating an image between frames when frame-rate conversion is performed. Taking such circumstances into consideration, in AVCHD standards, moving-image streams of different frame rates 50i and 60i are prohibited from being present together on the same recording medium. More specifically, in a data structure "UIAppInfo" serving as a management area, bit fields "Is60", "Is50", and "Is24" that specify a frame rate of moving images are provided as a recording format of a recording medium, and constrained conditions like the following ones are defined.

(1) Set Is60 to 1 for a recording medium on which a moving-image stream of 60 fps was recorded.
(2) Set Is50 to 1 for a recording medium on which a moving-image stream of 50 fps was recorded.
(3) Set Is24 to 1 for a recording medium on which a moving-image stream of 24 fps was recorded.
(4) Prohibit both a bit of Is60 and a bit of Is50 from being 1.
(5) Prohibit all bits of Is60 and Is50 from being 0.

Moving-image streams of different frame rates 50i and 60i not being allowed to be present together on the same recording medium satisfies what is defined in a constrained item (4). Moreover, since a moving-image stream is recorded at a frame rate of either 60i or 50i, either one of Is60 and Is50 has to be exclusively 1 as defined in a constrained item (5). Here, 24p is a video-signal format for still-image display such as a menu screen, and can be present together with either one of 60i and 50i.

On one hand, for manufacturers who manufacture digital video cameras based on AVCHD standards and other consumer media recording-and-playback apparatuses, in consideration of output and playback of a moving-image stream, which was recorded on a recording medium in a television monitor or the like, on a television monitor, a video-signal format which can be handled by an apparatus (that is, either 50i or 60i) is generally set in advance in accordance with a television system employed in a country or a region to which the product is to be shipped, at a factory or the like and then shipped. Moreover, one recording-and-playback device generally supports only a single video-signal format.

It is obvious that a digital video camera based on AVCHD standards can perform recording or playback processing of a moving-image stream on or from recording media on which format processing was performed in a video-signal format supported by the digital video camera itself, without any problem. For example, in a digital video camera based on AVCHD standards supporting 60i, a DVD on which format processing was performed with Is60 set to 1 is loaded and recording or playback can be performed on or from this DVD at a prescribed frame rate.

However, the above-described constrained items (1) through (5) regarding a video-signal format are defined as a recording format of a recording medium in AVCHD standards, but specific conditions have not been made as to how a device based on AVCHD standards (such as a digital video camera) should operate a recording medium, with respect to these constrained items. For example, there is no condition regarding handling processing in a case in which an unused recording medium (before format processing is performed) is loaded into a device based on AVCHD standards or in a case in which a recording medium on which format processing was performed at a frame rate that is not supported by the device itself (for example, a recording medium whose Is50 was set to 1 is loaded into a digital video camera supporting 60i).

Patent Document 1: Japanese Unexamined Patent Application Publication No. 2004-120364
Non-Patent Document 1: http://www.avchd-info.org/
Non-Patent Document 2: http://support.d-imaging.sony.co.jp/www/handycam/products/benri/avchd/index.h tml

### Disclosure of Invention

### Technical Problem

An object of the present invention is to provide a superior data processing apparatus and a superior data processing method that can desirably perform recording or playback of a video signal on or from a recording medium in accordance with a predetermined standard format, and a computer program.

Another object of the present invention is to provide a superior data processing apparatus and a superior data processing method that can operate a video signal on a recording medium in accordance with a proper video-signal format under a device use environment in which a plurality of video-signal formats are present together, and a computer program.

### Technical Solution

The present invention has been made in light of the above-described problems, and a first aspect thereof is a data processing apparatus that, in a video-signal format having parameter information that defines the attributes of a moving-image stream, performs data processing on a recording medium, the data processing including recording processing or playback processing, in accordance with a standard format in which recording of only a moving-image stream, the parameter of which is within a predetermined range, on a single recording medium and setting of the parameter information in a management-information file on the recording medium are defined, the data processing apparatus characterized by comprising,
management means for managing a video-signal format on which the data processing apparatus itself is based; and
control means for controlling data processing to be performed on a recording medium in accordance with the video-signal format on which the data processing apparatus itself is based.

AVCHD standards are defined whose main purpose is to enable a high-resolution video signal to be recorded on a recording medium of low capacity and of low speed. In accordance with the AVCHD standard format, recording can be performed on various recording media including DVD disks, memory cards, HDDs, and the like.

Moreover, in AVCHD standards, moving-image streams of different frame rates 50i and 60i are prohibited from being present together on the same recording medium. As a recording format of a recording medium, the bit fields "Is60" and "Is50" that specify a frame rate of moving images are provided in the data structure "UIAppInfo" serving as the management area, and both a bit of Is60 and a bit of Is50 are prohibited from being 1 and all bits of Is60 and Is50 are prohibited from being 0.

On one hand, for manufacturers who manufacture digital video cameras and other consumer media recording-and-playback apparatuses, a video-signal format which is supported by an apparatus is generally set in advance in accordance with a country or a region to which the product is to be shipped, and then shipped. Digital video cameras based on AVCHD standards can perform recording or playback processing of a moving-image stream on or from recording media on which format processing was performed in a video-signal format supported by the digital video cameras themselves, without any problem. However, although the constrained items regarding a video-signal format are defined as a recording format of a recording medium in AVCHD standards, specific conditions have not been made as to how a device based on AVCHD standards, such as a digital video camera, should operate a recording medium with respect to these constrained items.

In contrast, a data processing apparatus according to the present invention is constituted as, for example, a digital video camera that performs recording or playback of a video signal on or from a recording medium and a video-signal format supported by the data processing apparatus itself has been set in advance; however, the data processing apparatus is designed to appropriately perform format processing on an unused recording medium in accordance with the AVCHD standard format.

That is, when use of an unused recording medium is started, the data processing apparatus according to the present invention creates a basic directory structure defined by AVCHD standards and also creates a basic file within this basic directory, as part of processing in which a recording medium is formatted. In this case, the data processing apparatus is designed to check a video-signal format supported by the data processing apparatus itself and perform the setting of this video-signal format within the basic file. More specifically, in accordance with which video-signal format, 60i or 50i, is supported by the data processing apparatus itself, either Is60 or Is50 is set to 1 and the other is set to 0 within the data structure UIAppInfo.

Thus, according to the data processing apparatus according to the present invention, after format processing is performed on a recording medium, recording and playback processing can be subsequently performed on and from the recording medium within the data processing apparatus itself, and even when the recording medium is taken out from the device, the recording medium can satisfy all constraints defined in AVCHD standards.

Moreover, when a recording medium was loaded on which the format processing had already been performed in accordance with the AVCHD standard format, the data processing apparatus according to the present invention can appropriately perform use of the recording medium such as recording or playback in accordance with which video-signal format the recording medium is based on.

More specifically, in the data structure UIAppInfo within the basic file recorded within the basic directory of the loaded recording medium, reading is performed to detect which is set to 1, Is60 or Is50, and it is determined whether the read video-signal format matches the video-signal format supported by the data processing apparatus itself. Then, in a case in which they match, the use of the recording medium such as recording or playback is started; however, in a case in which they do not match, the use of the recording medium is not performed. Thus, the recording of moving-image streams of different video-signal formats on the same recording medium is not performed, the recording being a recording operation that is not allowed in AVCHD standards.

Moreover, a second aspect of the present invention is a computer program described in a computer readable format so as to cause, in a video-signal format having parameter information that defines the attributes of a moving-image stream, data processing including recording processing and playback processing to be executed by a computer, the data processing being to be performed on a recording medium in a data processing apparatus, in accordance with a standard format in which recording of only a moving-image stream, the parameter of which is within a predetermined range, on a single recording medium and setting of the parameter information in a management-information file on the recording medium are defined, the computer program characterized by causing the computer to execute,
a management procedure of managing a video-signal format in the recording medium; and
a media processing procedure of performing data processing on the recording medium in accordance with a video-signal format on which the data processing apparatus is based.

The computer program according to the second aspect of the present invention defines a computer program described in a computer readable format so as to realize predetermined processing on a computer. In other words, by installing the computer program according to the second aspect of the present invention, cooperating effects are exerted by the computer and effects and advantages similar to those of the data processing apparatus according to the first aspect of the present invention can be obtained.

### Advantageous Effects

According to the present invention, a superior data processing apparatus and a superior data processing method that can desirably perform recording or playback of a video signal on or from a recording medium in accordance with a predetermined standard format, and a computer program can be provided.

Moreover, according to the present invention, a superior data processing apparatus and a superior data processing method that can operate a video signal on a recording medium in accordance with a proper video-signal format under a device use environment in which a plurality of video-signal formats are present together, and a computer program can be provided.

According to the present invention, when a digital camera records moving images on a recording medium in accordance with AVCHD standards, the digital video camera can perform recording while satisfying all the standards.

Moreover, according to the present invention, even when a moving-image stream recorded on a recording medium is played back in a digital video camera or the like, by referring to bit fields "Is60" and "Is50" in "UIAppInfo", it can be determined whether a video-signal format regarding all images in the recording medium matches a video-signal format that can be played back by the digital video camera itself, at the time of loading of the recording medium or at an arbitrary time, and it is not necessary to access actual image data.

Moreover, according to the present invention, devices based on AVCHD standards, such as digital cameras, can prevent the formats 50i and 60i from being present together and video signals of different frame rates from being present together on a single recording medium. Thus, for a user who has a playback environment based on only a single video-signal format, a situation can be prevented in which signals that cannot be played back are present together (for example, a DVD on which moving images were recorded by a digital video camera cannot be played back by a DVD player).

Further objects, features, and advantages of the present invention will become apparent from a more detailed description based on the following embodiments of the present invention and the attached drawings.

### Brief Description of Drawings

[Fig. 1] Fig. 1 is a diagram schematically showing an internal structure of a digital video camera 1 to which the present invention is applied.
[Fig. 2] Fig. 2 is a diagram showing a directory structure of a recording medium 15 defined by AVCHD standards.
[Fig. 3] Fig. 3 is a diagram showing an example of a logical data structure for recording user data on the recording medium 15 in a recordable and editable format in accordance with an AVCHD standard format.
[Fig. 4] Fig. 4 is a flowchart showing a processing procedure for formatting a recording medium in a device based on AVCHD standards.
[Fig. 5] Fig. 5 is a flowchart showing a processing procedure for recording a moving-image stream on a recording medium on which format processing has been performed, in the device based on AVCHD standards.
[Fig. 6] Fig. 6 is a flowchart showing a processing procedure for playing back a moving-image stream from a recording medium on which recording has been performed, in the device based on AVCHD standards.

### Explanation of Reference Numerals

- 1: digital video camera
- 11: camera block
- 12: encoding unit
- 13: stream buffer
- 14: recording unit
- 15: recording medium
- 16: CPU
- 17: temporary storage medium

### Best Modes for Carrying Out the Invention

In the following, embodiments of the present invention will be specifically described with reference to the drawings.

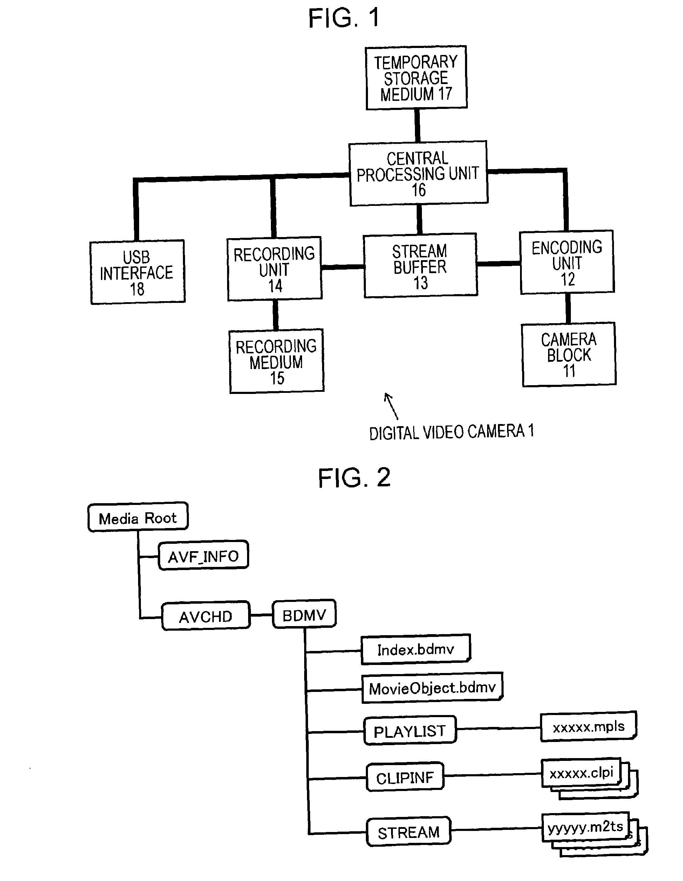

Fig. 1 schematically shows an internal structure of a digital video camera 1 to which the present invention is applied. The digital video camera 1 shown is based on AVCHD standards. The digital video camera 1 encodes a moving-image stream shot by a camera block 21 into an MPEG2-TS stream at an encoding unit 12, and this MPEG2-TS stream is recorded on a recording medium 15, which is built-in, by a recording unit 14. Moreover, when the digital video camera 1 is connected to a USB master (for example, a personal computer (not shown)) via a USB cable (not shown) from a USB interface 18, the digital video camera 1 operates as a USB slave, that is a mass storage device which is externally connected to the USB master.

A central processing unit 16 performs centralized control on a processing operation of the entire digital video camera 1 in a manner in which an execution program is loaded into a temporary storage medium 17 constituted by a degree such as a RAM (Random Access Memory) and a program is executed while system variables or environmental variables are being temporarily stored in the temporary storage medium 17. The term, processing operation, here includes moving-image shooting and necessary camerawork such as an autofocus function, automatic exposure, camera-shake correction, and auto shutter in the camera block 11, format processing of a recording area of the recording medium 15, mount processing of the recording medium 15, recording and playback of a moving-image stream on and from the recording area, and edit processing of a moving-image stream recorded on the recording medium 15 in the recording unit 14, operation processing as a USB slave, that is a mass storage device (here, in the case in which USB connection is established), and the like.

The camera block 11 is constituted by a lens for capturing a subject image, a solid-state image pickup device such as a CCD (ChargeCoupled Device) or a CMOS (Complementary Mental-Oxide Semiconductor) for generating an electrical image signal by performing photo-electric conversion in accordance with the amount of input light, an A/D converter for converting an image signal into a digital image signal, a demosaic processing unit for calculating an RGB signal from the digital image signal, and the like (not shown).

The encoding unit 12 encodes a moving-image stream in an MPEG2-TS scheme, and outputs an AV stream including a TS packet whose byte length is fixed. The TS packet is temporarily stored in a stream buffer 13, and thereafter the TS packet is transferred to the recording unit 14. The recording unit 14 receives TS packet data at specific time intervals via the stream buffer 13, and then records this on the recording area of the recording medium 15.

The recording unit 14 performs recording of files and other management data on the recording medium 15. Moreover, the recording unit 14 performs recording of a moving-image stream in a format based on AVCHD standards, and can realize a recording and editing function. The term, recording medium 15, here includes, for example, portable media such as a DVD, fixed media such as a hard disk, and the like; however, the type of recording medium is not specifically limited except that the recording medium follows the AVCHD standard format.

AVCHD standards are video camera standards whose main purpose is to enable a high-resolution video signal to be recorded on a recording medium of low capacity and of low speed. While the contents of existing disk format standards are continued to be used as necessary, functions regarding recording compatibility and additional-writing compatibility are added, and specifications regarding a data format for HD video cameras are being defined. More specifically, when moving-image content shot by a video camera is encoded into an MPEG2-TS stream (ClipAVStream) and the MPEG2-TS stream is recorded, a recording and editing function can be desirably realized by using accompanying files of various types such as a playback list (PlayList) and clip information (ClipInformation).

Fig. 2 shows a directory structure of the recording medium 15 defined by AVCHD standards. "PLAYLIST", "CLIPINF", and "STREAM" that are arranged just below a BDMV directory are subdirectories for storing playback lists, clip information files, and clip AV stream files, respectively.

Regarding moving-image data, collection of data items, each of which is a unit necessary for continuous synchronization playback, that is, playback ensuring real playback, constitutes one clip (Clip), and the clip is recorded as one moving-image file. A clip AV stream is a file in which a moving-image stream is stored in the MPEG2-TS format. Moreover, a clip information file exists in a pair with a clip AV stream file, and is a file in which information regarding a moving-image stream necessary when an actual moving-image stream is played back is described. Then, a playback list is constituted by a plurality of playback items (PlayItems). Each of the playback items specifies an individual playback starting point (IN point) and an individual playback end point (OUT point) of a clip, and the playback period and playback order of moving-image data are specified by the series of playback items in a playback list.

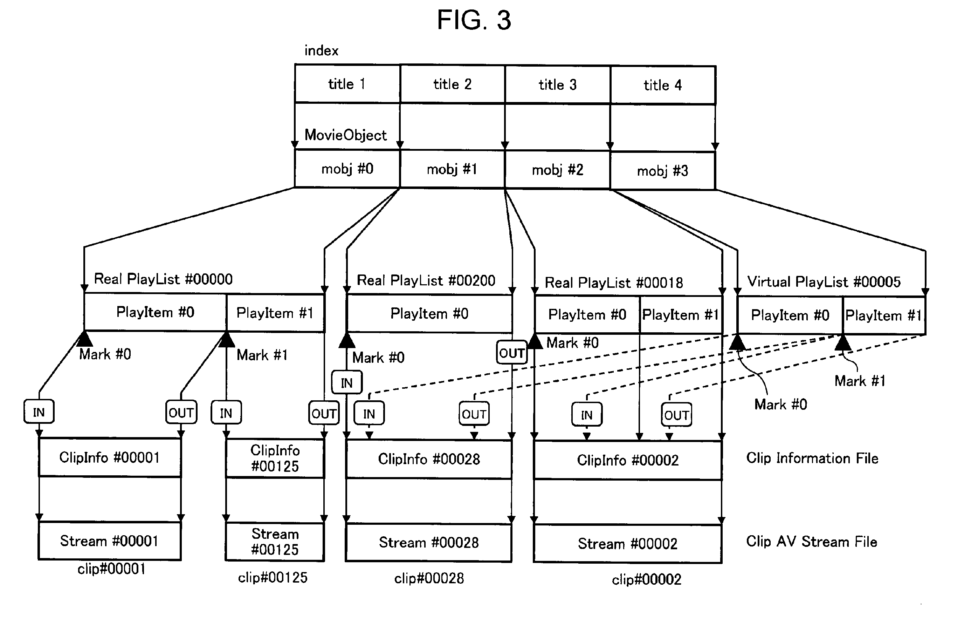

Fig. 3 shows an example of a logical data structure for recording user data on the recording medium 15 in a recordable and editable format in accordance with the AVCHD standard format. As shown in Fig. 3, when moving-image data shot by the digital video camera 1 is encoded into an MPEG2-TS stream and the MPEG2-TS stream is recorded, files of various types are used such as an index (Index), a moving-image object (MovieObject), a playback list (PlayList), clip information (ClipInformation), and a clip AV stream (ClipAVStream).

**[Table 2]**

| FILE TYPE | MAXIMUM NUMBER | FUNCTION |
|---|---|---|
| index | 1 | An original file for managing the entire media. It manages a correspondence relationship between a title shown to a user and a MovieObject. In the AVCHD format, the playback order of a playback list which should be originally managed by a MovieObject file is managed within metadata of an index file. |
| MovieObject | 1 | A file that manages a playback list which is to be played back when a title is specified. |
| Real PlayList | 2000 IN TOTAL | A playback list for an original title. In the list, videos that were recorded and played back are registered in the order of recording. |
| Virtual PlayList | | A playback list for creating a playback list defined by a user in nondestructive editing. A virtual playback list has no Clips unique thereto, and specifies a Clip registered in any one of real playback lists, whereby playback is performed. |
| Clip Information | 4000 | It exists in a pair with a Clip AV Stream file, and information regarding a stream necessary when an actual stream is played back is described therein. |
| Clip AV Stream | 4000 | A file in which a stream recorded in MPEG2-TS is stored. Image data in AVC is saved within this file. |

The entire recording area on the recording medium 15 is managed in a file-type layer of the index (index.bdmv). An index file is created for an individual title shown to a user, and manages a correspondence relationship between the title and a moving-image object. The term "title (Title)" here is a (user-recognizable) playback list (PlayList) aggregation, and is generally constituted by one program or content obtained at an individual date. In the AVCHD standard format, the playback order of a playback list which should be originally managed in a moving-image object file is managed within metadata of an index file. When a recording medium is loaded into a player, an index is first read and a user can see a title described in the index.

A moving-image object is a command aggregation for performing playback control, and is a file that manages, for example, a playback list to be played back when a title is specified in an existing ROM standard format. Referring to a moving-image object is listed as a gate of the title in an index. Here, in the AVCHD standard format, without referring to a moving-image object file, the relationship between a playback list and a title is managed by metadata of an index file.

A playback list is provided so as to correspond to a title shown to a user, and is constituted by one or more playback items (PlayItems). Each of the playback items has a playback starting point (IN point) and a playback end point (OUT point) of a clip, and thus specifies a playback period thereof. Then, by arranging a plurality of playback items on a time base within the playback list, the playback order of individual playback periods of a moving-image stream can be specified. Moreover, playback items specifying playback periods in different clip AV stream files can be included in one playback list.

A reference relationship can be freely set between clips and playback lists. For example, referring to one clip can be performed from two playback lists whose IN points and OUT points are different. Furthermore, a reference relationship can also be freely set between titles and moving-image objects. Playback lists are broadly divided into two types, a real playback list (RealPlayList) and a virtual playback list (VirtualPlayList).

A real playback list is a playback list for an original title, and playback items for a moving-image stream recorded and shot by a video camera are arranged in the real playback list in the order of recording.

A virtual playback list is a playback list for creating a playback list defined by a user in nondestructive editing. The virtual playback list has no clips (AV streams) unique thereto, and a playback item within the virtual playback list specifies a clip registered in any one of real playback lists or a range covering part of the clip. That is, a user can select necessary playback periods from a plurality of clips and can edit a virtual playback list by collecting (copying) individual playback items specifying these necessary playback periods.

A clip is a moving-image data file recorded as collection of data items, each of which is a unit necessary for continuous synchronization playback, that is, playback ensuring real playback, and the clip is constituted by a clip AV stream file (Clip AV Stream) and a clip information file (Clip Information).

A clip AV stream file as content data is a file in which a moving-image stream recorded on the recording medium 15 in the MPEG2-TS format is stored. In the AVCHD standard format, a moving-image stream is stored within this file.

A clip information file exists in a pair with a clip AV stream file, and is a file in which attributes regarding a moving-image stream are defined, the attributes being necessary when an actual moving-image stream is played back. More specifically, information that defines an encoding method for a moving-image stream, the size of the moving-image stream, playback time → address conversion, playback management information, a time map (here, in the case in which a recording medium is a DVD), and the like is included in the clip information file.

Video-signal formats handled in AVCHD standards are broadly divided into 60i for performing display in an interlaced manner at a frame rate of 60 Hz, 50i for performing display in an interlaced manner at a frame rate of 50 Hz, and 24p for performing display in a progressive manner at a frame rate of 24 Hz. Moreover, in AVCHD standards, moving-image streams of different frame rates 50i and 60i are prohibited from being present together on the same recording medium, the bit fields "Is60", "Is50", and "Is24" that specify a frame rate of moving images are provided in the data structure "UIAppInfo", and constrained conditions like the following ones are standardized.

(1) Set Is60 to 1 for a recording medium on which a moving-image stream of 60 fps was recorded.
(2) Set Is50 to 1 for a recording medium on which a moving-image stream of 50 fps was recorded.
(3) Set Is24 to 1 for a recording medium on which a moving-image stream of 24 fps was recorded.
(4) Prohibit both a bit of Is60 and a bit of Is50 from being 1.
(5) Prohibit all bits of Is60 and Is50 from being 0.

Consumer products based on AVCHD standards such as digital video cameras generally support only a single video-signal format. That is, the setting of a video-signal format of a product was performed in advance so that a recording operation can be performed in accordance with a television system (either 60i or 50i) employed in a country or a region to which the product is to be shipped. However, although the above-described constrained items (1) through (5) are defined as a recording format of a recording medium in AVCHD standards, specific conditions have not been made as to how a device based on AVCHD standards should operate a recording medium in accordance with these constrained items.

Hence, in this embodiment, a procedure for a case in which an unused recording medium (a recording medium before format processing is performed thereon) is loaded into a device based on AVCHD standards and a procedure for a case in which a recording medium on which format processing was performed at a frame rate that is not supported by the device itself (for example, a recording medium whose Is50 was set to 1 is loaded into a digital video camera supporting 60i) are defined. Thus, devices based on AVCHD standards can realize user-friendliness by performing recording while satisfying the constraints (1) through (5) for a moving-image stream that are defined in AVCHD standards.

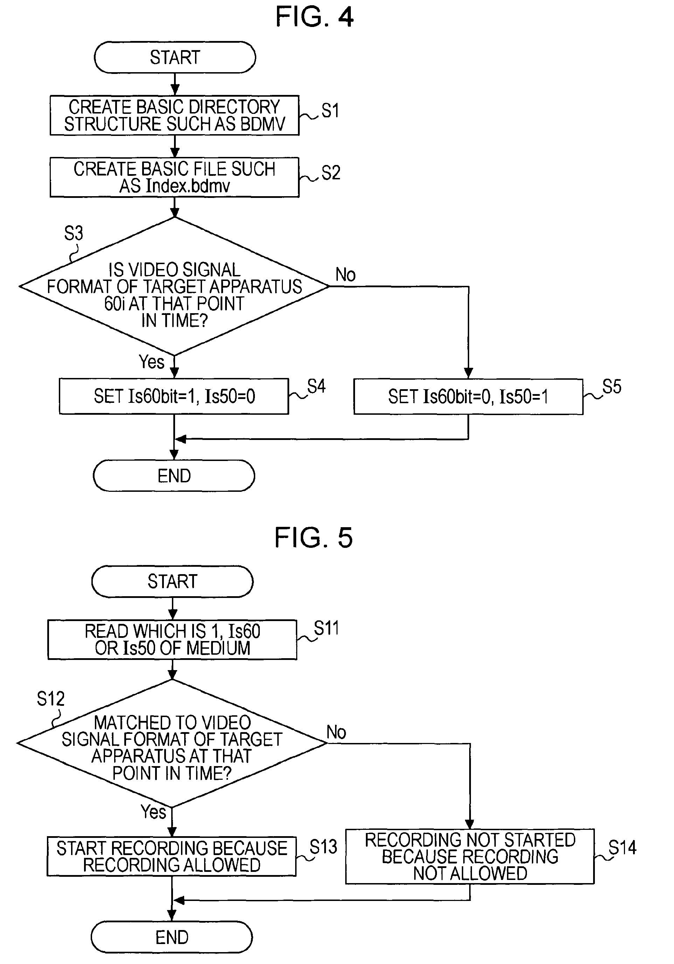

Fig. 4 shows a processing procedure for formatting a recording medium in a device based on AVCHD standards in a flowchart manner. The processing in which a recording medium is formatted is executed, for example, in a case in which an unused recording medium is loaded into the recording unit 14 or in a case in which a used recording medium is desired to be reinitialized.

First, a basic directory structure such as BDMV as shown in Fig. 2 is created in a recording area of a recording medium (step S1).

Next, a basic file such as Index.bdmv is created just below the BDMV directory (step S2). The data structure UIAppInfo for performing specification regarding a frame rate of a moving-image stream to be recorded is included within the Index.bdmv file. If 1 is written to Is24 while the format processing is performed, the effort of setting 1 to Is24 again can be saved thereafter when a 24p stream such as a menu screen is recorded, which is convenient. Moreover, either one of the frame rates 60i and 50i is allowed to be present together with 24p, and thus AVCHD standards are not violated.

Next, a digital video camera checks a video-signal format supported by the digital video camera itself (step S3). In general, a video-signal format supported by a digital video camera is set in advance in accordance with the television system of a country or a region to which the product is to be shipped. As a matter of course, a digital video camera may be configured to be able to switch between video-signal formats supported by the digital video camera. In that case, the video-signal format set at the moment needs to be checked.

Then, when the digital camera is based on 60i, 1 is written to an Is60 bit and 0 is written to an Is50 bit within the UIAppInfo (step S4).

On the other hand, when the digital video camera is based on 50i, 0 is written to the Is60 bit and 1 is written to the Is50 bit within the UIAppInfo (step S5).

Thereafter, the digital video camera can record a moving-image stream on this recording medium in the video-signal format supported by the digital video camera itself. As a matter of course, even if the recording medium is removed on which nothing was recorded after the formatting, this recording medium can satisfy all of the constrained items (1) through (5) all defined by AVCHD standards.

Here, in a case of a digital video camera capable of switching between video-signal formats supported by the digital video camera itself, as an alternative process for the above-described steps S3 through S5, either Is60 or Is50 within the UIAppInfo may be set to 1 as necessary in accordance with the video-signal format selected in the device at the time of format processing.

Moreover, Fig. 5 shows a processing procedure for recording a moving-image stream on a recording medium on which format processing has been performed, in a flowchart manner.

In a case in which a moving-image stream is recorded on the same recording medium subsequently to the format processing shown in Fig. 4, since recording is performed in the same video-signal format as the video-signal format set in step S4 or S5, the constraints (1) through (5) of AVCHD standards are satisfied.

On one hand, in a case in which a recording medium on which a moving-image stream had been recorded on the basis of AVCHD standards was loaded into this digital video camera, either Is60 or Is50 should only be set to 1 as defined by AVCHD standards, and checking is performed by referring to the UIAppInfo within the basic file (step S11).

For example, by reading Is60 or Is50 within this UIAppInfo in mount processing in which a recording medium was replaced with another, it can be detected that the recording medium employs which video-signal format.

Then, it is determined whether the read video-signal format matches the video-signal format set in the digital video camera itself (step S12).

Here, when the set video-signal formats match with each other, a recording operation is subsequently started (step S13). In this case, only moving-image streams of the same video-signal format are recorded on the recording medium, and thus the constrained items (1) through (5) defined in AVCHD standards can be satisfied.

On the other hand, when the set video-signal formats do not match with each other, as processing for abnormality, a recording operation is prohibited from being performed on the recording medium (step S14). In this case, since moving-image streams of different video-signal formats are not recorded together, no confliction occurs with respect to the constrained items (1) through (5) defined in AVCHD standards.

Here, in a case of a digital video camera capable of switching between video-signal formats supported by the digital video camera itself, as an alternative process for the processing for abnormality in the above-described step S14, recording of a moving-image stream may be started so as to comply with the setting of Is60 or Is50 on the recording medium as necessary. For example, when the set video-signal formats do not match with each other, the settings are automatically switched in the digital video camera, or recording is temporarily prohibited and a warning appears that urges a user to perform a switching operation of switching between video-signal formats of the digital video camera. Even when these alternative processes are performed, only moving-image streams of the same video-signal format are recorded on the recording medium, and thus the constrained items (1) through (5) defined in AVCHD standards can be satisfied.

Moreover, reading of Is60/Is50 from the recording medium is performed at the time of mount processing of the recording medium; however, the digital video camera includes a nonvolatile memory for storing read information (or set information at the time of format processing) regarding Is60/Is50 until the recording medium is replaced with a next recording medium, and in a case in which the digital video camera has a mechanism in which the recording medium cannot be replaced with another during power off, reading of Is60/Is50 should be performed only once. Here, in a case in which a digital video camera does not have these mechanisms, recording of Is60/Is50 needs to be performed every time media access is performed for the recording operation.

As described by referring to Fig. 4, with respect to Is60/Is50 within the UIAppInfo, these bit information items are written in the format processing. In contrast, with respect to Is24, the setting thereof needs to be performed when moving images of 24 fps are recorded or when, for example, a menu image is created in 24p. On the other hand, even when this is always set even in a case in which recording is not performed in 24 fps, the constraints of the standards are satisfied. Thus, this can also be set to 1 at the time of the processing in which a recording medium is formatted (for example, step S2), at the time when recording of a moving-image stream is performed in a video-signal format of 60i or 50i, or at an arbitrary point in time such as when a recording medium on which recording had been performed was inserted.

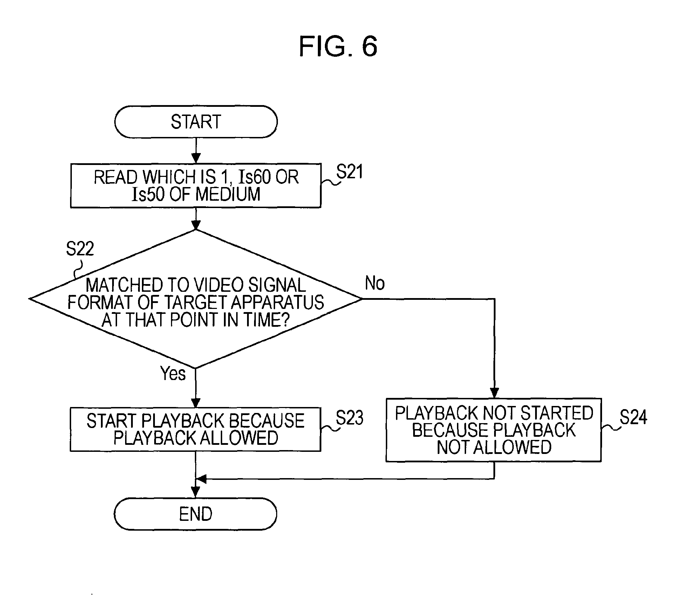

Fig. 6 shows a processing procedure for playing back a moving-image stream from a recording medium on which recording has been performed in a flowchart manner.

In a case in which a moving-image stream is played back from the same recording medium subsequently to the recording processing shown in Fig. 5, since recording was performed in a video-signal format supported by the device, the moving-image stream can be played back without any problem.

On one hand, in a case in which a recording medium on which recording had been performed in accordance with AVCHD standards was loaded into this digital video camera, either Is60 or Is50 should only be set to 1 as defined by AVCHD standards, and checking is performed by referring to the UIAppInfo within the basic file (step S21). For example, by reading Is60 or Is50 within this UIAppInfo in mount processing in which a recording medium was replaced with another, it can be detected that the recording medium employs which video-signal format (ditto).

Then, it is determined whether the read video-signal format matches the video-signal format set in the digital video camera itself (step S22).

Here, when the set video-signal formats match with each other, a recording operation is subsequently started (step S23); however, when the set video-signal formats do not match with each other, as processing for abnormality, a playback operation is prohibited from being performed from the recording medium(step S24).

As a result of this, with respect to all moving-image streams recorded on the recording medium, it can be determined whether the video-signal format thereof matches the video-signal format that can be played back by the digital video camera itself at the time when the recording medium was inserted, without accessing actual image data.

Here, in a case of a digital video camera capable of switching between video-signal formats supported by the digital video camera itself, as an alternative process for the processing for abnormality in the above-described step S24, playback of a moving-image stream may be started so as to comply with the setting of Is60 or Is50 on the recording medium as necessary. For example, when the set video-signal formats do not match with each other, the settings are automatically switched in the digital video camera, or playback is temporarily prohibited and a warning appears that urges a user to perform a switching operation of switching between video-signal formats of the digital video camera.

### Industrial Applicability

In the above, the present invention has been described in detail with reference to specific embodiments. However, it is obvious that various modifications and substitutions can be made by those skilled in the art without departing from the gist of the present invention.

Herein, embodiments that are applied to digital video cameras have been mainly described; however, the gist of the present invention is not limited thereto. The present invention can be applied to various data processing apparatuses, which include DVD players/recorders and personal computers, based on AVCHD standards.

Moreover, the coverage of the present invention is not limited to AVCHD standards. The present invention can be similarly applied to data processing apparatuses that perform initialization, recording and playback processing on a recording medium in accordance with various other standard formats that prohibit data items/streams of a plurality of signal formats from being recorded together on a single recording medium (or a single recording area).

In short, the present invention has been disclosed by way of exemplary embodiments, and the contents disclosed herein should not be restrictively construed. The gist of the present invention should be determined in consideration of the claims.

## Claims

1. A data processing apparatus that, in a video-signal format having parameter information that defines the attributes of a moving-image stream, performs data processing on a recording medium, the data processing including recording processing or playback processing, in accordance with a standard format in which recording of only a moving-image stream, the parameter of which is within a predetermined range, on a single recording medium and setting of the parameter information in a management-information file on the recording medium are defined, the data processing apparatus **characterized by** comprising:
management means for managing a video-signal format on which the data processing apparatus itself is based; and
control means for controlling data processing to be performed on a recording medium in accordance with the video-signal format on which the data processing apparatus itself is based.

2. The data processing apparatus according to Claim 1,
**characterized in that:**
the control means creates a basic directory structure defined by the standard format in a recording area of an unused recording medium and also creates a basic file defined by the standard format within the basic directory, and performs format processing on the recording medium by setting information regarding the video-signal format on which the data processing apparatus itself is based, within the basic file.

3. The data processing apparatus according to Claim 1,
**characterized in that:**
the control means reads a video-signal format set in a management-information file of a recording medium on which formatting or recording has already been performed, compares the video-signal format with the video-signal format on which the data processing apparatus itself is based, and allows use of the recording medium when they match or performs processing for abnormality when they do not match.

4. The data processing apparatus according to Claim 3,
**characterized in that:**
the use of the recording medium is recording of a moving-image stream on the recording medium or playback of a moving-image stream recorded on the recording medium, and
the control means prohibits recording and playback operations from being performed on the recording medium in the processing for abnormality.

5. The data processing apparatus according to Claim 3,
**characterized in that:**
video-signal formats on which the data processing apparatus itself is based can be switched therebetween in the management means, and
in the processing for abnormality, the control means causes the switching between the video-signal formats in the management means so as to comply with a video signal set in the management-information file of the recording medium and allows the use of the recording medium.

6. The data processing apparatus according to Claim 3,
**characterized in that:**
video-signal formats on which the data processing apparatus itself is based can be switched therebetween in the management means, and
in the processing for abnormality, the control means prohibits the use of the recording medium, and urges a user to perform a switching operation of switching between the video-signal formats in the management means.

7. A data processing method, in a video-signal format having parameter information that defines the attributes of a moving-image stream, for performing data processing on a recording medium in a data processing apparatus, the data processing including recording processing or playback processing, in accordance with a standard format in which recording of only a moving-image stream, the parameter of which is within a predetermined range, on a single recording medium and setting of the parameter information in a management-information file on the recording medium are defined, the data processing method **characterized by** comprising:
a management step for managing a video-signal format in the recording medium; and
a media processing step for performing data processing on the recording medium in accordance with a video-signal format on which the data processing apparatus is based.

8. The data processing method according to Claim 7,
**characterized in that:**
in the media processing step, a basic directory structure defined by the standard format is created in a recording area of an unused recording medium and a basic file defined by the standard format is also created within the basic directory, and format processing is performed on the recording medium by setting information regarding the video-signal format on which the data processing apparatus is based, within the basic file.

9. The data processing method according to Claim 7,
**characterized in that:**
in the management step, a video-signal format set in a management-information file of a recording medium on which formatting or recording has already been performed is read, and
in the media processing step, the video-signal format read from the recording medium is compared with the video-signal format on which the data processing apparatus is based, and use of the recording medium is allowed when they match or processing for abnormality is performed when they do not match.

10. The data processing method according to Claim 9,
**characterized in that:**
the use of the recording medium is recording of a moving-image stream on the recording medium or playback of a moving-image stream recorded on the recording medium, and
in the media processing step, recording and playback operations are prohibited from being performed on the recording medium in the processing for abnormality.

11. The data processing method according to Claim 9,
**characterized in that:**
video-signal formats on which the data processing apparatus is based can be switched therebetween, and
in the media processing step, in the processing for abnormality, the switching between the video-signal formats is performed in the data processing apparatus so as to comply with a video signal set in the management-information file of the recording medium and the use of the recording medium is allowed.

12. The data processing method according to Claim 9,
**characterized in that:**
video-signal formats on which the data processing apparatus is based can be switched therebetween, and
in the media processing step, in the processing for abnormality, the use of the recording medium is prohibited and a user is urged to perform a switching operation of switching between the video-signal formats in the management means.

13. A computer program described in a computer readable format so as to cause, in a video-signal format having parameter information that defines the attributes of a moving-image stream, data processing including recording processing and playback processing to be executed by a computer, the data processing being to be performed on a recording medium in a data processing apparatus, in accordance with a standard format in which recording of only a moving-image stream, the parameter of which is within a predetermined range, on a single recording medium and setting of the parameter information in a management-information file on the recording medium are defined, the computer program **characterized by** causing the computer to execute:
a management procedure of managing a video-signal format in the recording medium; and
a media processing procedure of performing data processing on the recording medium in accordance with a video-signal format on which the data processing apparatus is based.
